# EUROPÄISCHE PATENTANMELDUNG

(11) **EP 2 148 075 A1**
(43) Veröffentlichungstag der Anmeldung: **27.01.2010**
(21) Anmeldenummer: 09007851.0
(22) Anmeldetag: 16.06.2009
(51) Int. Cl.: F02M 35/024, B01D 46/00

(54) **Luftfilter für Brennkraftmaschine**

(30) Priorität: 21.07.2008 AT 11262008
(71) Anmelder: GE Jenbacher GmbH & Co. OHG, 6200 Jenbach (AT)
(72) Erfinder: Gruber, Friedrich, 6283 Hippach (AT); Kathrein, Gerhard, 6200 Jenbach (AT); Lang, Jürgen, 6130 Schwaz (AT)
(74) Vertreter: Torggler, Paul Norbert

(57) **Zusammenfassung**

Luftfilter (1) für eine Brennkraftmaschine (2), umfassend ein Gehäuse (5) mit einem Strömungskanal (18) und einen Filtereinsatz (6), wobei der Filtereinsatz (6) den Strömungskanal (18) in einen Anströmkanal (13) mit Lufteintrittsöffnung (7) und in einen Abströmkanal (14) mit Luftaustrittsöffnung (8) unterteilt, wobei der Filtereinsatz (6) eine Lufteintrittsfläche (19) aufweist, die sich zumindest bereichsweise über die Länge des Filtereinsatzes (6) entlang der Luftströmungsrichtung (17) erstreckt, wobei der Filtereinsatz (6) zumindest zwei aufeinander folgende Filterelemente, vorzugsweise Zylinderrohrabschnitte (20, 21, 22), aufweist, wobei der (die) Außendurchmesser (d20, d21, d22) der Filterelemente, vorzugsweise Zylinderrohrabschnitte (20, 21, 22), unterschiedlich ist (sind).

## Beschreibung

Die Erfindung betrifft eine Brennkraftmaschine mit einem Ansaugrohr und einem Luftfilter. Weiters betrifft die Erfindung einen Luftfilter für eine Brennkraftmaschine, umfassend ein Gehäuse mit einem Strömungskanal und einen Filtereinsatz, wobei der Filtereinsatz den Strömungskanal in einen Anströmkanal mit Lufteintrittsöffnung und in einen Abströmkanal mit Luftaustrittsöffnung unterteilt. Schließlich betrifft die Erfindung eine stationäre Kraftanlage, umfassend eine Brennkraftmaschine und einen Generator, der von der Brennkraftmaschine betreibbar ist.

Die Filterung der Ansaugluft bei Brennkraftmaschinen bzw. Verbrennungsmotoren ist eine allgemein geübte Praxis, die praktisch bei jedem Verbrennungsmotor zum Einsatz kommt. In vielen Anwendungsfällen wird zur Filterung der Luft ein Porenfilter verwendet, wobei der Querschnitt der Poren, durch die die zu filternde Luft strömt, entsprechend der geforderten Filterklasse ausgelegt wird. Häufig werden dazu Papiergewebe oder Fasermaterialien verwendet, die typischerweise in Filterpatronen oder entsprechende Einfassungen eingebracht sind und zwar in einer Art, dass bei möglichst kleinem Bauvolumen ein möglichst großer Durchströmquerschnitt bzw. ein großer Filterflächenquerschnitt erreicht wird, sodass der Druckabfall auf ein tolerierbares Maß begrenzt wird. Die gesamte Funktionseinheit des Filters besteht im Wesentlichen aus einem Gehäuse mit einer Lufteintritts- und einer Luftaustrittsöffnung sowie einem Filtereinsatz, der in einer Art und Weise integriert ist, dass die Luft durch die Filterfläche(n) hindurchströmen muss. Die übliche Gestalt der Luftfilter ist häufig tonnenförmig mit einem Längen / Durchmesserverhältnis von ungefähr zwei oder prismenförmig mit einem Längen / Breitenverhältnis von ebenfalls ca. zwei.

Die Hauptkomponenten motorbetriebener stationärer Kraftanlagen sind die Brennkraftmaschine und ein Generator, wobei die Brennkraftmaschine den Generator zur Stromerzeugung antreibt. Die Unterbringung solcher stationärer Kraftanlagen in einem Maschinenraum erfolgt in der Regel so, dass der Generator eine möglichst unaufgeheizte Luft zur Kühlung der Wicklungen erhält. Die Maschinenraumbelüftung ist also so ausgelegt, dass der Generator in Strömungsrichtung der Luft an erster Stelle angeordnet ist. Bei solchen stationären Kraftanlagen heizt der Generator die ihn kühlende Luft um bis zu 30° C auf. Die erwärmte Generatorkühlluft bzw.

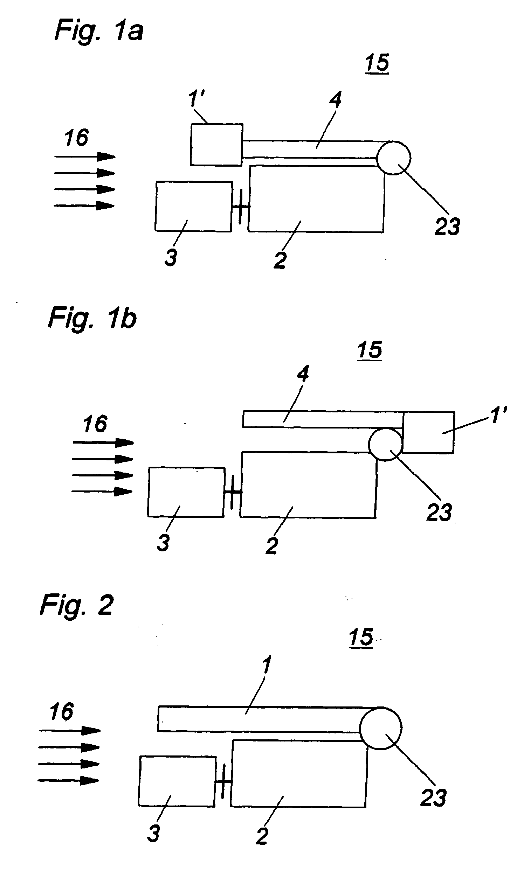

Generatorabluft vermischt sich stromabwärts mit der übrigen Luft, wobei die thermische Abstrahlung der Brennkraftmaschine zur zusätzlichen Erwärmung der Luft im Maschinenraum führt. Bei ungünstiger Lage des Saugstutzens für die Verbrennungsluft der Brennkraftmaschine, insbesondere, wenn die Ansaugung am dem Generator entgegengesetzten Ende der Brennkraftmaschine erfolgt, wird der Brennkraftmaschine stark erwärmte Luft zugeführt, was insbesondere bei hohen Außentemperaturen erhebliche Leistungs- und Wirkungsgradeinbußen verursachen kann. Die Ansaugung der Verbrennungsluft erfolgt bei turboaufgeladenen Motoren am Ort der Aufladegruppe, die aus konstruktiven Gründen häufig auf der dem Generator abgewandten Motorseite angeordnet ist. Um zu vermeiden, dass zu stark erwärmte Ansaugluft zum Motor gelangt, wird die Luft über eine entsprechende Verbindungsleitung an einer geeigneten Stelle angesaugt. Dies führt zu Konstruktionslösungen, wie sie in den Fig. 1 a und 1b abgebildet sind.

Gemäß diesen Lösungen ist ein Ansaugrohr vorgesehen, das (entgegen der Strömungsrichtung der Luft) von der Aufladegruppe über den Motor und über den Generator reicht. Auf diese Art kann dem Motor frische Luft zugeführt werden, die nicht vom Generator erwärmt wurde. Am vorderen Ende des Ansaugrohrs oder am hinteren Ende des Verbindungsrohrs, vorzugsweise unmittelbar vor der Aufladegruppe ist typischerweise ein Luftfilter angeordnet, wie zuvor beschrieben.

Diese Anordnung ist relativ aufwändig und erweist sich nachteilig für Wartungs- und Reparaturarbeiten. Bei hoch aufgeladenen Brennkraftmaschinen mit zunehmender Leistungssteigerung tritt ein Ansauggeräusch des Verdichters auf (das sogenannte Turboladerheulen), sodass in manchen Fällen zusätzliche Einrichtungen zur Geräuschdämmung vorgesehen werden müssen.

Aufgabe der vorliegenden Erfindung ist es daher, ein Luftfilter sowie eine Brennkraftmaschine und eine stationäre Kraftanlage der eingangs beschriebenen Art bereit zu stellen, wo die beschriebenen Probleme inklusive der Geräuschemission verringert sind.

Die Aufgabe wird gelöst durch einen Luftfilter für eine Brennkraftmaschine, umfassend ein Gehäuse mit einem Strömungskanal und einen Filtereinsatz, wobei der Filtereinsatz den Strömungskanal in einen Anströmkanal mit Lufteintrittsöffnung und in einen Abströmkanal mit Luftaustrittsöffnung unterteilt, wobei der Filtereinsatz eine Lufteintrittsfläche aufweist, die sich zumindest bereichsweise entlang der Luftströmungsrichtung erstreckt, wobei der Filtereinsatz zumindest zwei, vorzugsweise zumindest drei, aufeinander folgende Filterelemente, vorzugsweise Zylinderrohrabschnitte aufweist, wobei der Außendurchmesser der Filterelemente, vorzugsweise Zylinderrohrabschnitte unterschiedlich ausgebildet.

Ein Zylinder ist laut allgemeiner Definition von zwei parallelen ebenen Flächen und einer Mantel- bzw. Zylinderfläche die von parallelen Geraden gebildet wird, begrenzt. Das heißt, ein Zylinder entsteht durch Verschieben einer ebenen Fläche oder Kurve entlang einer Geraden, die nicht in dieser Ebene liegt. Rohrförmig bedeutet in diesem Fall, dass die Grund- und Deckfläche des Zylinders in der Mitte durchbrochen sind. Einfachstes Beispiel wäre eine Kreisringfläche. In diesem Zusammenhang kann aber als Zylinderrohr jegliche Form in Frage kommen, wie z.B. Kreisform, Polygonform, elliptische Formen und unregelmäßige Formen gleichermaßen.

Da das Ansaugrohr neben der Luftansaugung gleichzeitig die Aufgabe übernimmt, die Luft zu filtern, erfolgt die Luftfilterung über eine längere Strecke, als beim Stand der Technik üblich. So wirkt bereits das Luftfiltermedium gut schalldämmend und durch Anbringen einer weiteren, speziell zur Schalldämmung im erforderlichen Frequenzbereich optimierten Absorptionsschicht bzw. Dämmschicht an der Gehäuseinnenwand kann der Geräuschpegel sehr stark reduziert werden.

Bei herkömmlichen Luftfiltern mit einem Filtereinsatz in Tonnenform oder Prismenform strömt die Ansaugluft in den Strömungskanal anströmkanalseitig an der Luftfiltereintrittsfläche in den Luftfilter ein und trifft frontal, d.h., im Wesenlichen senkrecht auf die Lufteintrittsfläche des Filtereinsatzes. Nach dem Durchtritt durch den Filtereinsatz tritt die Luft abströmkanalseitig aus dem Filtereinsatz wieder aus dem Filtermedium aus und kann über die Luftaustrittsöffnung aus dem Luftfilter austreten. Mit einem Filtereinsatz bei dem der Filtereinsatz eine Lufteintrittsfläche aufweist, die sich zumindest bereichsweise entlang der Luftströmungsrichtung erstreckt, kann die Geräuschemission verringert werden, da bei ein solcher Filtereinsatz nicht die gesamte Luftmenge durch eine zur Strömungsrichtung normal angeordnete Filterfläche dringen muss, sondern über eine größere Fläche längs der Strömungsrichtung (d.h. seitlich) in das Filtermaterial eindringen bzw. aus dem Filtermaterial austreten kann. Der Filtereinsatz besteht längs der Strömungsrichtung zumindest abschnittsweise aus einem Filtermaterial. Das Filtermaterial kann beispielsweise ein Porenfilter sein, bei dem die zu filternde Luft durch Poren strömt. In Abhängigkeit des gewünschten Reinheitsgrades der Luft kann das Filtermaterial aus einer bestimmten Filterklasse ausgewählt sein. Beispielsweise können Papiergewebe oder Fasermaterialien verwendet werden.

In einer bevorzugten Ausführungsvariante kann vorgesehen sein, dass sich die Querschnittsfläche des Anströmkanals entlang des Filtereinsatzes ändert. Durch eine geeignete Dimensionierung der Querschnittsfläche im Anströmkanal und/oder im Abströmkanal kann die axiale Strömungsgeschwindigkeit über dem gesamten Luftfilter im Wesentlichen konstant gehalten werden, wodurch sich das Bauvolumen und die Strömungsverluste minimieren lassen.

Weiters kann in einer bevorzugten Ausführungsvariante vorgesehen sein, dass die Querschnittsfläche des Anströmkanals entlang des Filtereinsatzes entlang der Luftströmungsrichtung kleiner wird. Die Abnahme dieser Querschnittsfläche kann stetig aber auch unstetig erfolgen, wobei im unstetigen Fall die Querschnittssprünge umso kleiner werden, je höher die Anzahl der Filterelemente ist. Günstigerweise nimmt die Querschnittsfläche in den Varianten, wo eine Abnahme der Querschnittsfläche des Anströmkanals vorgesehen ist, entlang des Filtereinsatzes nicht mehr oder nur unwesentlich (d.h. nur im Rahmen von Fertigungstoleranzen) zu. Weiters kann vorgesehen sein, dass der Umfang des Filtereinsatzes entlang der Luftströmungseinrichtung abnimmt oder zunimmt.

In einer bevorzugten Ausführungsvariante der Erfindung kann vorgesehen sein, dass sich das Querschnittsverhältnis von Anströmkanal zu Abströmkanal in Luftströmungsrichtung entlang des Filtereinsatzes in der Weise ändert, wie es der Änderung der Volumensströme im An- und Abströmkanal aufgrund des Übertritts von Luft durch das Filtermedium entspricht. Folglich kann vorgesehen sein, dass die Querschnittsfläche(n) des Abströmkanals entlang des Filtereinsatzes größer wird (werden), vorzugsweise in dem Ausmaß, in dem die Querschnittsfläche(n) des Ausströmkanals kleiner wird (werden).

Um dies besonders einfach zu ermöglichen, kann vorgesehen sein, dass das Gehäuse im Bereich des Filtereinsatzes zumindest abschnittsweise einen konstanten Innendurchmesser aufweist.

In einer einfachen Ausgestaltungsvariante kann vorgesehen sein, dass der Filtereinsatz als vorzugsweise endseitig offener Hohlkörper ausgebildet ist, wobei die Mantelfläche des Hohlkörpers zumindest bereichsweise aus Filtermaterial besteht. Es kann weiters vorgesehen sein, dass der Hohlkörper kegelförmig oder kegelstumpfförmig ausgebildet ist, d.h., als stirnseitig offener Hohlkegel oder als an einer Stirnseite offener, Hohlkegelstumpf.

In einer besonders bevorzugten Ausführungsvariante kann vorgesehen sein, dass ein erstes Filterelement, vorzugsweise Zylinderrohrabschnitt einen Außendurchmesser aufweist, der mit dem Innendurchmesser eines folgenden Filterelements, vorzugsweise Zylinderrohrabschnitts korrespondiert. Fertigungstechnisch kann so auf einfache Art mit einfachen Materialien ein Filtereinsatz hergestellt werden, indem einzelne Zylinderrohrabschnitte miteinander verbunden werden. In weiterer Folge wäre es denkbar, dass die Zylinderrohrabschnitte über einen Bereich ihrer Länge ineinander gesteckt sind, da so auf Befestigungsmittel zum befestigen der Zylinderrohrabschnitte verzichtet werden könnte. Auf diese Art und Weise können Rohrabschnitte verwendet werden, die leichter zu fertigen sind als beispielsweise ein Kegel oder Kegelstumpf. Es ist jedoch aus wartungstechnischen Gründen günstig, wenn die einzelnen Filterelemente demontierbar sind.

In einer weiteren bevorzugten Ausführungsvariante kann vorgesehen sein, dass das Gehäuse auf der Innenseite zumindest bereichsweise ein Dämmmaterial aufweist. Das Dämmmaterial kann dabei in Form einer, vorzugsweise durchgängigen, Dämmschicht aufgebracht sein. Das Versehen des Gehäuses mit einem Dämmmaterial bzw. einer Dämmschicht zeigt in diesem Fall eine deutlich verbesserte Wirkung als nur ein Filtereinsatz allein oder eine Dämmschicht allein, da das Zusammenwirken eines Filtermaterials mit einer geeigneten Dämmschicht die schalldämmende Wirkung deutlich verstärkt.

In einer Ausführungsvariante kann vorgesehen sein, dass das Gehäuse im Wesentlichen rohrförmig, vorzugsweise zylinderrohrförmig ausgebildet ist. Die bereits für den Filtereinsatz weiter oben beschriebenen Zylinderrohrformen können auch hier Einsatz finden. Weiters kann vorgesehen sein, dass das Verhältnis Gehäuselänge zu Gehäuseinnendurchmesser größer oder gleich vier, vorzugsweise aber größer gleich fünf ist.

Um den lufteintrittseitigen Druckverlust zu reduzieren, kann günstigerweise vorgesehen sein, dass die Lufteintrittsöffnung größer als die größte Gehäuseinnenquerschnittsfläche in Strömungsrichtung ist. Im einfachsten Fall könnte die Lufteintrittsöffnung ein Trichter sein. Fertigungstechnisch und auch aus Platzgründen ist es jedoch günstiger, wenn die Lufteintrittsöffnung abgeschrägt ist. Günstigerweise ist in allen Fällen vorgesehen, dass die Lufteintrittsöffnung mit einem geeigneten Schutzgitter versehen ist, welches die Wirkung von Rückzündungen mildert und den Filtereinsatz vor mechanischen Beschädigungen schützt. In einer Ausführungsvariante kann vorgesehen sein, dass Bereiche des Gehäuses gitterförmig ausgebildet sind, um die Lufteintrittsfläche zu erhöhen. Dieses Gitter, aber auch das Schutzgitter könnten aus Kostengründen auch aus Kunststoff gebildet sein.

In einer Ausführungsvariante kann vorgesehen sein, dass der Filtereinsatz zumindest abschnittsweise aus Filtermaterial besteht, wobei die Dicke des Filtermaterials in Strömungsrichtung über die gesamte Länge im Wesentlichen konstant ist. Bei der Konstruktion und Ausführung sollte darauf geachtet werden, dass im Wesentlichen die gesamte in das Luftfilter eintretende Luft durch das Filtermaterial durchtritt und nicht am Filtermaterial vorbeiströmen kann.

Günstigerweise kann vorgesehen sein, dass die Lufteintrittsöffnung und die Luftaustrittsöffnung im Gehäuse auf gegenüberliegenden Seiten angeordnet sind. Bevorzugt kann dabei vorgesehen sein, dass die Entfernung zwischen Lufteintrittsöffnung und Luftaustrittsöffnung bezogen auf die Gesamtlänge des Gehäuses maximal ist. Lufteintrittsöffnung und Luftaustrittsöffnung können diametral angeordnet sein.

Weitere Vorteile und Details der Erfindung zeigen die folgenden Figuren und Figurenbeschreibungen. In stark vereinfachter Form wird gezeigt, in
- Fig. 1a, 1b: zwei Beispiele stationärer Kraftanlagen nach Stand der Technik,
- in Fig. 2: eine Brennkraftmaschine und eine stationäre Kraftanlage gemäß der Erfindung, sowie
- in Fig. 3-6: vier erfindungsgemäße Luftfilter im Längsschnitt.

In den Fig. 1a und 1b ist jeweils eine stationäre Kraftanlage 15 nach Stand der Technik gezeigt, die in einem nicht näher dargestellten Maschinenraum angeordnet ist. Die stationäre Kraftanlage 15 umfasst eine Brennkraftmaschine 2 und einen Generator 3, wobei die Brennkraftmaschine 2 den Generator 3 antreibt. Beispielhaft handelt es sich bei der Brennkraftmaschine um einen Gas-Ottomotor. Wie aus der Fig. 1a ersichtlich umströmt Luft 16 (in der Bildebene von der linken Seite kommend) den Generator 3 und die Brennkraftmaschine 2. An der Brennkraftmaschine 2 ist nun eine Aufladegruppe 23 angeordnet, in der Ansaugluft 16 verdichtet wird. Würde nunmehr die Ansaugluft 16 direkt im Bereich der Aufladegruppe 23 angesaugt werden, würde die Wärmeabluft des Generator 3 mit angesaugt werden, was zu einer Temperaturerhöhung der durch das Ansaugrohr 4 angesaugten Luft um bis zu 20° führen könnte, sodass es zu einem starken Leistungs- und Wirkungsgradabfall an der Brennkraftmaschine 2 kommen würde. Daher ist nach Stand der Technik häufig ein Ansaugrohr 4 vorgesehen, welches einen Teil der unerwärmten Ansaugluft 16 ansaugt, sodass es zu keiner Ansaugung von Abluft des Generators 3 kommt. Im Ausführungsbeispiel der Fig. 1a ist noch ein herkömmliches Luftfilter 1' vorgeschalten, das die eigentliche Luftansaugung vornimmt und wie eingangs beschrieben, mittels eines tonnenförmigen oder prismenförmigen Filters die Luft filtert. Die Luft strömt durch das Filtermaterial und anschließend in das Ansaugrohr 4 übertragen. In der Aufladegruppe 23 erfolgt die Verdichtung der Luft beispielsweise über einen abgasangetriebene Verdichtungseinrichtung und schließlich die Zufuhr der Luft an die Arbeitszylinder der Brennkraftmaschine 2. In der Anordnung gemäß Fig. 1b ist das Luftfilter 1' nach dem Verbindungsrohr 4 aber vor der Aufladegruppe 23 angeordnet.

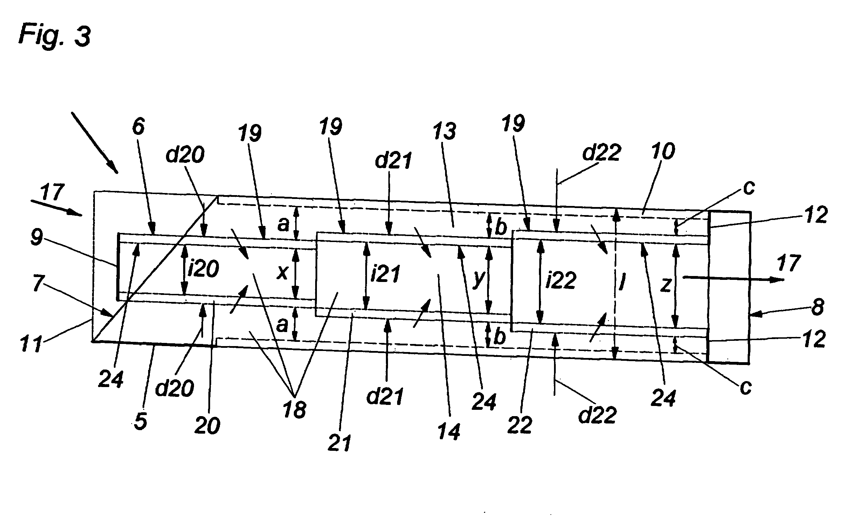

Die Fig. 2 zeigt einerseits eine Brennkraftmaschine 2 und andererseits eine stationäre Kraftanlage 15 mit jener Brennkraftmaschine 2, einem Generator 3 und einer Aufladegruppe 23 analog der Beispiele gemäß Fig. 1 a und 1b. Im Unterschied zum Stand der Technik ist nunmehr ein Luftfilter 1 vorgesehen, der das früher getrennt vorgesehene Luftfilter 1' und Ansaugrohr 4 überflüssig macht, da der Luftfilter in das Ansaugrohr integriert ist, sodass die Kraftanlage 15 platzsparender ist bzw. im Bereich des Luftfilters 1 besser zugänglich ist. Gleichzeitig wird die Geräuschemission vermindert. Das Luftfilter könnte wie in den Fig. 2 und 3 beschrieben ausgeführt sein.

Ein Luftfilter 1 wie es in der Fig. 3 beschrieben ist und wie es erfindungsgemäß vorgesehen ist, weist gegenüber den oben geschilderten Fällen (Fig. 1 a und 1b) eine Reihe von Vorteilen der bereits geschilderten Art auf. Es ist ein Luftfilter 1 für eine Brennkraftmaschine gezeigt, mit einem Gehäuse 5 mit einer Lufteintrittsöffnung 7 und einer Luftaustrittsöffnung 8. Der Bereich zwischen der Lufteintrittsöffnung 7 und der Luftaustrittsöffnung 8 bildet den Strömungskanal 18. Das Gehäuse 5 weist zwischen Lufteintrittsöffnung 7 und Luftaustrittsöffnung 8 einen Filtereinsatz 6 auf, der den Strömungskanal 18 in einen Anströmkanal 13 und in einen Abströmkanal 14 unterteilt. Als Anströmkanal 13 und Abströmkanal 14 wird im Rahmen der Erfindung jeweils der von Luft im Wesentlichen frei durchströmbare Teil des Strömungskanals 18 verstanden, d.h., jener Teil wo z.B. kein Filtereinsatz 6 angeordnet ist. Die angesaugte Luft dringt im Anströmkanal 13 über die Lufteintrittsfläche 19 in das Filtermaterial des Filtereinsatzes 6 ein und verlässt das Filtermaterial an der Luftaustrittsfläche 24 sodass es in den Abströmkanal 14 gelangt. Anschließend tritt die Luft über die Luftaustrittsöffnung 8 aus dem Luftfilter 1 bzw. dem Gehäuse 5 aus.

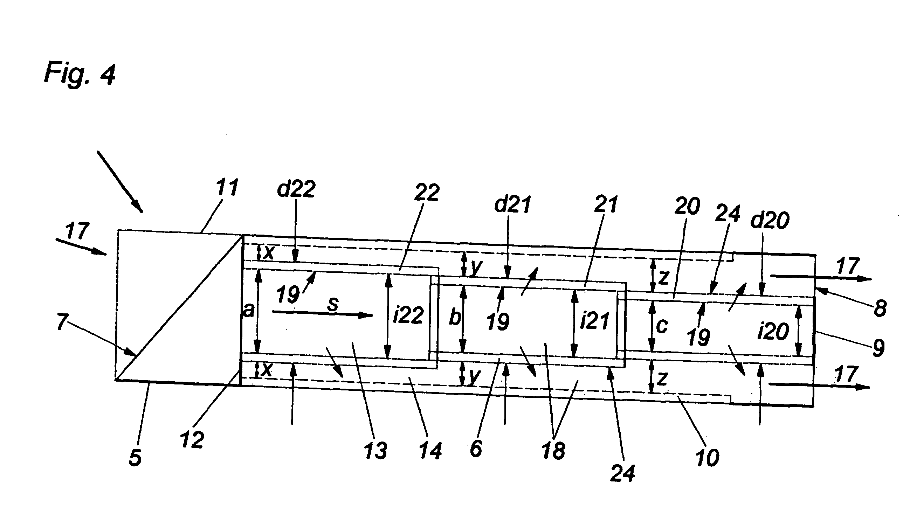

Die freie Querschnittsfläche a, b, c, des Anströmkanals 13 nimmt entlang der Strömungsrichtung 17 ab. Gleichzeitig nimmt der Umfang (dargestellt ist allerdings nur der jeweilige Außendurchmesser d20, d21, d22) des Filtereinsatzes 6 längs der Strömungsrichtung s zu. Umgekehrt nimmt im gezeigten Ausführungsbeispiel die freie Querschnittsfläche x, y, z im Abströmkanal 14 in Luftströmungsrichtung s zu. Über die Längserstreckung des Filtereinsatzes 6 nimmt freie Querschnittsfläche a, b, c, des Anströmkanals 13 zweimal zu. Die Querschnittsflächenänderung ist im gezeigten Ausführungsbeispiel unstetig, d.h., es erfolgt immer eine sprunghafte Änderung. Theoretisch könnte der Filtereinsatz 6 aber auch in umgekehrter Einbaulage angeordnet sein (siehe Fig. 4). Das Filterelement 6 hat an einer Seite eine Abdeckung 9, sodass die gesamte Luft durch das Filtermaterial durchtreten muss, d.h., über die Lufteintrittsfläche 19 in das Filtermaterial eindringt und an der Luftaustrittsfläche 24 aus dem Filtermaterial austritt, und nicht am Filtermaterial vorbeiströmen kann. Anstelle einer Abdeckung 9 könnte hier aber auch Filtermaterial vorgesehen sein. Das Gehäuse 5 weist auf der Innenseite bereichsweise ein Dämmmaterial bzw. eine Dämmschicht 10 auf. Im gezeigten Ausführungsbeispiel ist das Gehäuse 5 im Wesentlichen rohrförmig ausgebildet. Im Speziellen als Kreiszylinderrohr. Die Lufteintrittsöffnung 7 ist abgeschrägt um so die Lufteintrittsfläche 7 im Verhältnis zum Durchmesser des Gehäuses 5 zu erhöhen. Durch die Abschrägung kann eine Flächenvergrößerung proportional 1 / cos a erzielt werden. Bei einem Winkel α von 60° kann somit die Lufteintrittsfläche verdoppelt werden. Wie in Kombination mit der Fig. 2 ersichtlich ist, kann im Vergleich zum Stand der Technik bei einer solchen Ausgestaltung auf ein herkömmliches Luftfilter 1a verzichtet werden und der eigentliche Luftfilter 1 in das Verbindungsrohr integriert werden bzw. an Stelle eines herkömmlichen Verbindungsrohrs 4 verwendet werden. Somit kann auf einen sehr platzintensiven Luftfilter 1' verzichtet werden und das Verbindungsrohr 4 in der Form eines Luftfilters 1 muss nur geringfügig im Durchmesser vergrößert werden. Es ergibt sich somit ein synergistischer Effekt, da nicht nur auf den gesonderten Luftfilter 1' und das Verbindungsrohr 4 verzichtet werden kann, sondern nur mehr ein einzelner Luftfilter 1, der gleichzeitig Verbindungsrohr 4 ist, verwendet wird, gleichzeitig erfolgt auch noch eine Schalldämmung, die dazu führt, dass die stationäre Kraftanlage 15 im Betrieb ruhiger ist.

Aus der Fig. 3 ist ersichtlich, dass das gezeigte Ausführungsbeispiel mehrere Filterelemente bzw. Zylinderrohrabschnitte 20, 21, 22 aufweist. Die Filterelemente bzw. Zylinderrohrabschnitte 20, 21, 22 umfassen Filtermaterial. (Im gezeigten Ausführungsbeispiel besteht jedes Filterelement 20, 21, 22 aus Filtermaterial.) Der Außendurchmesser d20 des Filterelementes bzw. Zylinderrohrabschnitts 20 korrespondiert mit dem Innendurchmesser i21 des Filterelementes bzw. Zylinderrohrabschnitts 21, sodass die beiden Filterelemente bzw. Zylinderrohrabschnitte 20, 21 ineinander steckbar sind. Im Ausführungsbeispiel der Fig. 4 ist dies auch verdeutlicht. Beim Ausführungsbeispiel der Fig. 3 sind die Abschnitte 20, 21 mittels Befestigungsmittel befestigt, während im Beispiel der Fig. 4 die Abschnitte 20, 21, 22 über die Länge I ineinandergesteckt sind. Zwischen den Zylinderrohrabschnitten 21 und 22 besteht dasselbe Verhältnis wie zwischen den Abschnitten 20 und 21, d.h. dass der Außendurchmesser d21 des Zylinderrohrabschnittes 21 mit dem Innenrohrdurchmesser i22 des Zylinderrohrabschnitts 22 korrespondiert, sodass diese ineinander steckbar sind. Am Ende des Gehäuses 5 ist eine Haltevorrichtung 12, die den Filtereinsatz 6 zurückhält vorgesehen. Aufgrund der stufenweisen Anordnung der einzelnen Zylinderrohrelemente 20, 21, 22 kann systematisch Luft durch das Filtermaterial (mit den Pfeilen verdeutlicht) übertreten. Die Menge an gefilterter Luft nimmt in Strömungsrichtung s stetig zu, während die ungefilterte Luftmenge in der Strömungsrichtung s stetig abnimmt.

Die Lufteintrittsöffnung 7 und die Luftaustrittsöffnung 8 sind im gezeigten Ausführungsbeispiel gegenüberliegend im Gehäuse 5 angeordnet, bezogen auf die Längserstreckung des Gehäuses 5 also diametral. Die Entfernung von Lufteintrittsöffnung 7 und Luftaustrittsöffnung 8 ist maximal bezogen auf die Gehäusedimensionen.

Das Ausführungsbeispiel der Fig. 4 entspricht dem Beispiel der Fig. 3 mit der Änderung, dass der Filtereinsatz 6 umgekehrt angeordnet ist. Auch hier werden die Strömungsquerschnittsfläche a', b', c' in Strömungsrichtung s kleiner entlang des Filtereinsatzes 6. Der Filtereinsatz 6 ist an der Haltevorrichtung 12 mittels bekannter Haltemittel befestigt. Eine Abdeckung 9 verhindert das Austreten von ungefilterter Luft. Ansonsten wird auf die einzelnen Bauteile nicht näher Bezug genommen, da diese dem Beispiel der Fig. 3 entspricht, sodass auf die dortige Figurenbeschreibung verwiesen werden darf.

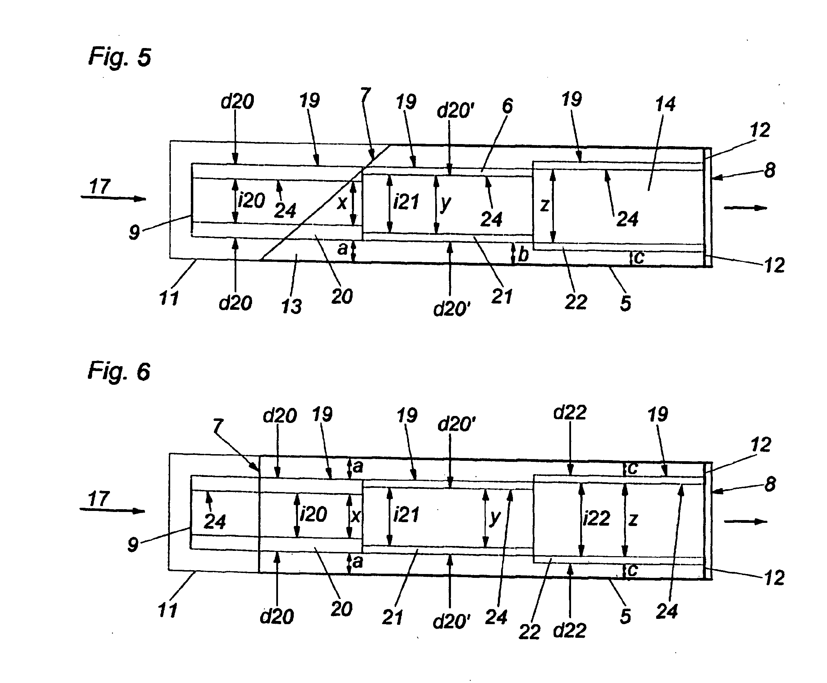

Die Ausführungsbeispiele der Fig. 5 und 6 entsprechen in den meisten Punkten dem Beispiel der Fig. 3, sodass aus Gründen der Übersichtlichkeit einige Bezugszeichen nicht eingezeichnet sind. Auch in den Fig. 5 und 6 ist jeweils ein Luftfilter 1 für eine Brennkraftmaschine gezeigt. Das Luftfilter 1 weist jeweils ein Gehäuse 5 mit einer Lufteintrittsöffnung 7 und einer Luftaustrittsöffnung 8 auf. Im Strömungskanal 18 ist nun ein Filtereinsatz 6 eingebracht, der den Strömungskanal 18 in einen Anströmkanal 13 und in einen Abströmkanal 14 analog zur Fig. 3 unterteilt. Der Filtereinsatz 6 ist aus mehreren Filterelementen 20, 21, 22 aufgebaut. Im gezeigten Ausführungsbeispiel sind die Filterelemente 20, 21, 22 als Zylinderrohrabschnitte ausgebildet. Auch in diesem Fall könnten die Filterelemente 20, 21, 22 andere Formen aufweisen. Das Beispiel der Fig. 5 unterscheidet sich zum Beispiel der Fig. 3 insbesondere darin, dass der Filtereinsatz 6 deutlich aus dem eigentlichen Gehäuse 5 herausragt und die Lufteintrittsfläche im Vergleich zur Fig. 3 in Richtung Strömungsrichtung 17 versetzt angeordnet ist. Ein weiterer Unterschied zur Fig. 3 besteht darin, dass das Filterelement 20 eine größere Materialdicke aufweist als das Filterelement 20 der Fig. 3 bzw. als die Filterelemente 21, 22 gemäß Ausführungsbeispiel der Fig. 5. Im gezeigten Ausführungsbeispiel der Fig. 5 ist die Lufteintrittsöffnung 7 durch ein vergrößertes Schutzgitter 11 abgedeckt. Insgesamt ergibt sich daraus eine vergrößerte Filterleistung, da bereits außerhalb des eigentlichen Gehäuses 5 Luft durch das Filtermaterial des Filterelements 20 dringen kann. Durch die größere Materialdicke des Filterelements 20 wird auch die Filterstärke in diesem Bereich vergrößert. Im gezeigten Ausführungsbeispiel verhält es sich so, dass der Innendurchmesser i20 des Filterelements 20 kleiner ist als der Innendurchmesser i21 des Filterelements 21. Gleichzeitig ist allerdings der Außendurchmesser d29 des Filterelements 20 im Wesentlichen gleich groß wie der Außendurchmesser d20' des Filterelements 21. Aus dieser Differenz gibt sich auch der Unterschied in der Materialdicke des jeweiligen Filterelements 20, 21. Während im gezeigten Ausführungsbeispiel das Abdeckgitter 11 vergrößert ist, könnte in einer alternativen Ausführungsform genauso gut vorgesehen sein, dass das Gehäuse bereichsweise gitterförmig bzw. luftdurchlässig ausgebildet ist in der Art, wie es in der Fig. 5 oder in der Fig. 6 gezeigt ist. In der Fig. 6 ist im Unterschied zur Fig. 5 die Lufteintrittsöffnung 7 nicht mehr abgeschrägt, sondern im Wesentlichen senkrecht zur Luftströmungsrichtung 17. Wesentlichster Vorteil der Ausführungsvarianten der Fig. 5 und 6 gegenüber der Ausführungsvariante der Fig. 3 bzw. der Fig. 4 ist der Umstand, dass durch die Vergrößerung der Lufteintrittsfläche mehr Luft in den Luftfilter 1 eindringen kann und so die Baulänge des Luftfilters verkürzt werden kann. Bei den gezeigten Ausführungsbeispielen der Fig. 5 und 6 kann so eine Verkürzung der Gehäuselänge I von 10 bis 30 Prozent im Vergleich zu jenem Beispiel gemäß Fig. 3 erzielt werden. Sowohl in der Fig. 5 als auch in der Fig. 6 ist aus Gründen der Übersichtlichkeit die Dämmschicht 10 nicht eingezeichnet, kann aber wie auch in den vorangegangenen Figuren vorgesehen sein.

Bei allen Ausführungsvarianten ist günstigerweise vorgesehen, dass das Verhältnis Gehäuselänge I zu Gehäuseinnendurchmesser 18 größer gleich vier, vorzugsweise größer gleich fünf ist. Auf diese Art und Weise wird die Filterleistung maximiert, bei optimaler Geräuschdämmung. Das Schutzgitter 11 könnte beispielsweise aus einem Gittergeflecht aus Metall, das eine Flammschutzfunktion gegenüber Rückzündungen erfüllt, umfassen. An der Innenseite des Gehäuses 5 ist günstigerweise die Dämmschicht auf mindestens zwei Drittel der Gehäuselänge 17 angebracht, entweder in der Form einer Beschichtung oder in Form einer Auskleidung. Mit einer abgeschrägten Eintrittsöffnung 7 wird die Luft darüber hinaus direkt auf die Schalldämmschicht 10 geleitet, wo diese sofort ihre schalldämmende Wirkung entfalten kann.

## Patentansprüche

1. Luftfilter (1) für eine Brennkraftmaschine (2), umfassend ein Gehäuse (5) mit einem Strömungskanal (18) und einen Filtereinsatz (6), wobei der Filtereinsatz (6) den Strömungskanal (18) in einen Anströmkanal (13) mit Lufteintrittsöffnung (7) und in einen Abströmkanal (14) mit Luftaustrittsöffnung (8) unterteilt, wobei der Filtereinsatz (6) eine Lufteintrittsfläche (19) aufweist, die sich zumindest bereichsweise über die Länge des Filtereinsatzes (6) entlang der Luftströmungsrichtung (17) erstreckt, **dadurch gekennzeichnet, dass** der Filtereinsatz (6) zumindest zwei aufeinander folgende Filterelemente, vorzugsweise Zylinderrohrabschnitte (20, 21, 22), aufweist, wobei der (die) Außendurchmesser (d20, d21, d22) der Filterelemente, vorzugsweise Zylinderrohrabschnitte (20, 21, 22), unterschiedlich ist (sind).

2. Luftfilter nach Anspruch 1, **dadurch gekennzeichnet, dass** sich die Querschnittsfläche (a, b, c) des Anströmkanals (13) entlang des Filtereinsatzes (6) ändert.

3. Luftfilter nach Anspruch 1 oder Anspruch 2, **dadurch gekennzeichnet, dass** sich das Querschnittsverhältnis von Anströmkanal (13) zu Abströmkanal (14) in Luftströmungsrichtung (17) entlang des Filtereinsatzes (6) ändert.

4. Luftfilter nach Anspruch 2 oder Anspruch 3, **dadurch gekennzeichnet, dass** die Querschnittsfläche(n) (a, b, c) des Anströmkanals (13) entlang des Filtereinsatzes (6) kleiner wird (werden).

5. Luftfilter nach einem der Ansprüche 1 bis 4, **dadurch gekennzeichnet, dass** das Gehäuse (5) im Bereich des Filtereinsatzes (6) zumindest abschnittsweise einen konstanten Innendurchmesser (23) aufweist.

6. Luftfilter nach einem der Ansprüche 1 bis 5, **dadurch gekennzeichnet, dass** der Filtereinsatz (6) als vorzugsweise endseitig offener Hohlkörper ausgebildet ist, wobei die Mantelfläche des Hohlkörpers zumindest bereichsweise aus Filtermaterial besteht.

7. Luftfilter nach Anspruch 6, **dadurch gekennzeichnet, dass** der Hohlkörper kegelstumpfförmig oder kegelförmig ausgebildet ist.

8. Luftfilter nach einem der Ansprüche 1 bis 7, **dadurch gekennzeichnet, dass** die Filterelemente, vorzugsweise Zylinderrohrabschnitte (20, 21, 22) durch Steckverbindung und/oder Schraubverbindung miteinander verbunden sind.

9. Luftfilter nach einem der Ansprüche 1 bis 8, **dadurch gekennzeichnet, dass** das Gehäuse (5) auf der Innenseite zumindest bereichsweise ein Dämmmaterial aufweist.

10. Luftfilter nach einem der Ansprüche 1 bis 9, **dadurch gekennzeichnet, dass** die Fläche der Lufteintrittsöffnung (7) größer als der Gehäuseinnenquerschnitt (19) in Strömungsrichtung (s) ist.

11. Luftfilter nach einem der Ansprüche 1 bis 10, **dadurch gekennzeichnet, dass** der Filtereinsatz (6) zumindest abschnittsweise aus Filtermaterial besteht, wobei die Dicke (d) des Filtermaterials in Strömungsrichtung (s) über die gesamte Länge des Filtereinsatzes (6) im Wesentlichen konstant ist.

12. Luftfilter nach einem der Ansprüche 1 bis 11, **dadurch gekennzeichnet, dass** die Lufteintrittsöffnung (7) von einem Schutzgitter (11) bedeckt ist.

13. Luftfilter nach einem der Ansprüche 1 bis 12, **dadurch gekennzeichnet, dass** der Filtereinsatz (6) im Bereich der Lufteintrittsfläche aus dem Gehäuse (5) bereichsweise herausragt.

14. Brennkraftmaschine umfassend einen Luftfilter nach einem der Ansprüche 1 bis 13.

15. Stationäre Kraftanlage umfassend eine Brennkraftmaschine, einen Generator, der von der Brennkraftmaschine betreibbar ist sowie einen Luftfilter nach einem der Ansprüche 1 bis 13.
